# FASCICULE DE BREVET EUROPEEN

(11) **EP 3 017 427 B1**
(45) Date de publication et mention de la délivrance du brevet: **22.10.2025**
(21) Numéro de dépôt: 14749899.2
(22) Date de dépôt: 27.06.2014
(51) Int. Cl.: G06T 15/20, G06T 19/00

(54) **PROCEDE ET SYSTEME DE REALITE AUGMENTEE POUR LA SUPERVISION**
REALITÄTSERWEITERUNGSVERFAHREN UND SYSTEM ZUR ÜBERWACHUNG
AUGMENTED REALITY METHOD AND SYSTEM FOR MONITORING

(30) Priorité: 03.07.2013 FR 1356483
(43) Date de publication de la demande: 11.05.2016
(73) Titulaire: Safran Aircraft Engines, 75015 Paris (FR)
(72) Inventeur: LE GONIDEC, Serge, Daniel, F-27200 Vernon (FR)
(74) Mandataire: Cabinet Beau de Loménie
(86) Numéro de dépôt international: PCT/FR2014/051639
(87) Numéro de publication internationale: WO 2015/001233

(56) Documents cités:
- EP-A1- 0 892 327
- WO-A1-2007/066166
- BANE R ET AL: "Interactive Tools for Virtual X-Ray Vision in Mobile Augmented Reality", PROCEEDINGS OF THE THIRD IEEE AND ACM INTERNATIONAL SYMPOSIUM ON MIXED AND AUGMENTED REALITY, NOV. 2 - 5, ARLINGTON, VA, USA, IEEE, PISCATAWAY, NJ, USA, 2 November 2004 (2004-11-02), pages 231 - 239, XP010769702, ISBN: 978-0-7695-2191-6, DOI: 10.1109/ISMAR.2004.36
- TRIGGS B ET AL: "AUTOMATIC CAMERA PLACEMENT FOR ROBOT VISION TASKS", PROCEEDINGS OF THE INTERNATIONAL CONFERENCE ON ROBOTICS AND AUTOMATION. NAGOYA,JAPAN, MAY 21 - 27, 1995; [PROCEEDINGS OF THE INTERNATIONAL CONFERENCE ON ROBOTICS AND AUTOMATION], NEW YORK, IEEE, US, 21 May 1995 (1995-05-21), pages 1732 - 1737, XP000701638, ISBN: 978-0-7803-1966-0, DOI: 10.1109/ROBOT.1995.525522

## Description

L'invention concerne un procédé d'affichage d'image de supervision, et un système de supervision pour la supervision d'un dispositif. Ce dispositif peut être un outil industriel, une machine, un véhicule, un être vivant, un bâtiment, etc.

La supervision peut avoir lieu soit en régime de fonctionnement normal du dispositif, ou lorsque le dispositif est soumis à des essais, ou encore toute autre circonstance spécifique.

L'invention peut notamment être utilisée pour la supervision de moteurs, et plus particulièrement de turbomachines ou de moteurs pour fusées, lorsqu'ils sont soumis à des essais.

Dans le monde industriel, la supervision du fonctionnement d'un dispositif, par exemple une unité de fabrication, est généralement réalisée à l'aide d'un système de supervision, sous la responsabilité d'un responsable de supervision.

Un tel système de supervision comprend généralement des moyens de surveillance vidéo, comportant une ou plusieurs caméras, dont les images sont affichées sur un ou plusieurs écrans.

Le système de supervision peut également comporter des écrans sur lesquels sont affichés des diagrammes, par exemple des diagrammes de circulation de fluides, et sur lesquels sont affichées en temps réel les valeurs de paramètres critiques de l'unité de fabrication.

Le système de supervision peut également comporter un système de suivi (ou monitoring), qui surveille différents paramètres du dispositif et émet des messages d'alerte signalant les dysfonctionnements constatés. Ces messages peuvent être affichés sur les diagrammes de circulation de fluide cités précédemment.

Le responsable de supervision analyse en temps réel les images reçues des caméras et les messages reçus. En fonction de ces messages, il peut notamment modifier l'angle de vue de l'une des caméras ou encore zoomer sur des parties spécifiques de l'unité de fabrication supervisée.

En cas d'anomalie ou de dysfonctionnement, un grand nombre de messages d'erreurs ou d'anomalie sont affichés presque simultanément par le système de supervision. Compte tenu du nombre considérable d'informations affichées, il est alors difficile pour le responsable de supervision d'assimiler suffisamment rapidement les informations, de sélectionner les informations pertinentes et de prendre la décision optimale.

En particulier, les informations importantes sont réparties sur plusieurs écrans (écrans vidéos montrant les images prises par les caméras, les écrans présentant les diagrammes de circulation de fluide, des écrans éventuellement affichant les messages d'alerte et les valeurs des variables critiques du dispositif, ...), ce qui complique le travail du responsable de supervision pour comprendre la situation et prendre les décisions nécessaires.

Aussi, un premier objectif de la présente invention est de proposer un procédé d'affichage pour la supervision d'un dispositif au moyen d'un système de supervision, qui permette un affichage optimisé des informations relatives à un dispositif supervisé, de manière à faciliter la compréhension de celles-ci par le responsable de supervision.

Pour atteindre cet objectif, selon un premier aspect de l'invention il est proposé un procédé d'affichage d'image de supervision pour la supervision d'un dispositif au moyen d'un système de supervision, le système de supervision comprenant un afficheur et au moins une caméra réelle disposée de manière à pouvoir filmer tout ou partie du dispositif.

Le procédé d'affichage est défini dans la revendication 1.

De préférence (mais pas nécessairement), le procédé d'affichage est mis en œuvre en temps réel, ce qui permet que l'image de supervision affichée sur l'afficheur soit ainsi mise à jour en temps réel. L'afficheur affiche alors un film ou séquence vidéo qui présente en temps réel l'évolution du dispositif.

Le procédé d'affichage fait appel à deux types d'images : les images acquises, qui sont des images acquises par la ou les caméras (réelles), et des images de synthèse représentant le dispositif. Les images de synthèse sont calculées à l'aide d'un modèle numérique tridimensionnel du dispositif (ou du moins d'une partie de celui-ci).

De manière très schématique, le procédé d'affichage selon l'invention consiste donc à acquérir une image du dispositif à l'aide d'une caméra réelle (la caméra active), à calculer une image de synthèse représentant tout ou partie du dispositif, et à combiner l'image acquise et l'image de synthèse pour former une image de supervision qui est alors affichée.

On comprend que la combinaison de l'image acquise et de l'image de synthèse est effectuée de manière à conserver dans l'image de supervision les informations relatives au dispositif les plus importantes.

Ainsi, l'image combinée obtenue permet de présenter sur un seul afficheur ou écran, à tout moment, la représentation la plus pertinente du dispositif.

En fonctionnement normal, l'image de supervision affichée peut être une vue d'ensemble, externe, du dispositif, telle qu'acquise par l'une des caméras.

Cependant le procédé d'affichage selon l'invention démultiplie les possibilités d'affichage, en permettant d'ajouter aux informations provenant des caméras (les images acquises), des informations additionnelles qui sont intégrées dans l'image de synthèse. L'image de supervision ainsi obtenue constitue une image extrêmement riche, particulièrement utile pour la compréhension du comportement du dispositif supervisé. L'image de synthèse peut servir par exemple pour représenter des parties internes cachées du dispositif.

Grâce à la richesse et au nombre d'informations contenues dans l'image de supervision, il est alors généralement possible de réduire le nombre d'écrans nécessaires pour assurer la supervision du dispositif.

De plus, avantageusement l'image de supervision est formée en fonction de l'état du dispositif, puisque soit la détermination des paramètre d'image, soit le calcul de l'image de synthèse, soit la formation de l'image de supervision, est (ou sont) réalisé(s) en fonction du paramètre d'état ou de paramètres d'état du dispositif.

Dans ce but il convient naturellement de présélectionner des jeux de paramètre d'image spécifiques, et/ou un mode de calcul de l'image de synthèse spécifique, et/ou un mode de formation d'image de supervision spécifique, qui soi(en)t adapté(s) pour que, lorsque le dispositif est dans un certain état prédéterminé, l'image de supervision formée soit particulièrement pertinente pour interpréter l'état du dispositif et permettre la supervision de celui-ci.

Ce mode de fonctionnement permet de soumettre au superviseur une image de synthèse particulièrement pertinente, et permet ainsi typiquement de réduire le temps passé par le superviseur pour analyser l'état du dispositif supervisé, identifier les dysfonctionnements, et déclencher les actions correctives adaptées.

### PARAMETRES D'IMAGE

Les paramètres d'image (orientation et position de la caméra par rapport au dispositif ; paramètres optiques de la caméra) sont les paramètres qui déterminent ce qui apparaît dans l'image d'une caméra. Ils précisent en effet où la caméra est positionnée, comment elle est orientée, et quels sont ses paramètres optiques (zoom, etc.).

Les paramètres d'image acquise définissent ce qui apparaîtra dans l'image acquise par la caméra active, et les paramètres d'image de synthèse définissent quelle image sera calculée au cours de l'étape de calcul d'image de synthèse c).

Les paramètres d'image peuvent donc concerner une caméra réelle, ou encore une caméra virtuelle produisant une image en étant positionnée dans une scène virtuelle.

L'étape a2) de détermination des paramètres d'image peut être une étape passive, durant laquelle les éléments choisis (caméra active) ou déterminés (paramètres d'image) soit prennent des valeurs par défaut, soit sont reconduits et conservent la valeur prise lors de l'itération précédente du programme mis en œuvre par le système de supervision.

Le choix de la caméra active dans certains cas détermine à lui seul les deux jeux de paramètres d'image lorsque pour les deux jeux de paramètres (d'image acquise et d'image de synthèse) on prend les paramètres d'image en cours de la caméra active. C'est ce qui se passe le plus souvent.

Cependant, il peut aussi y avoir certaines différences entre les paramètres d'image acquise et les paramètres d'image de synthèse.

Les paramètres d'image acquise et les paramètres d'image de synthèse peuvent par exemple être différents :
- pour compenser une erreur de positionnement et/ou d'orientation et/ou dans les paramètres optiques de la caméra active; et/ou
- parce que l'image de synthèse représente seulement une portion de l'image active.

### IMAGE DE SYNTHESE

Les images de synthèse sont des images du dispositif ou d'une partie du dispositif telle que pourrait les fournir une caméra virtuelle. Ce sont en fait des images de rendu obtenues (de manière connue en soi) à partir d'une scène virtuelle dans laquelle se trouve le modèle numérique tridimensionnel du dispositif (ou une partie de celui-ci), et dans laquelle sont positionnées une ou plusieurs 'caméras virtuelles'.

Dans certains cas, il peut être opportun qu'il y ait des différences entre la scène virtuelle et le dispositif réel.

Par exemple, la scène virtuelle peut éventuellement comporter les modèles numériques d'autres objets que le dispositif soumis à essai. Elle peut par exemple, dans le cas d'un essai de fonctionnement de moteur fusée, comporter les modèles des réservoirs de carburant du moteur, etc., dans le cas où la représentation de ces objets facilite la compréhension de l'image pour le responsable de supervision.

D'autre part, éventuellement dans l'image de synthèse le dispositif peut être incomplet (ou, de manière équivalente, des parties du dispositif peuvent être rendues transparentes à l'écran).

Dans d'autre cas, le dispositif peut être positionné dans la scène virtuelle de manière différente de la réalité ; par exemple en position 'éclatée', afin de permettre une représentation plus lisible de la constitution du dispositif.

Par ailleurs, l'image de synthèse est généralement enrichie par des informations supplémentaires qui se superposent au rendu visuel du modèle numérique du dispositif. Ces informations supplémentaires peuvent notamment varier en temps réel. Ces informations supplémentaires sont normalement intégrées à l'image de synthèse au voisinage du point de l'image qu'elles concernent.

Ces informations supplémentaires peuvent être une représentation, positionnée sur le dispositif lui-même, du champ de variations de certains paramètres du dispositif.

Cette représentation peut être faite en 'fausses couleurs', c'est-à-dire avec différentes couleurs conventionnellement affectées à différentes plages de valeurs du paramètre représenté.

Ces informations supplémentaires peuvent enfin comporter des informations symboliques, notamment verbales.

Grâce aux informations supplémentaires qu'elle intègre, et/ou grâce au fait qu'elle représente des parties du dispositif non visibles (ou moins bien visibles) par les caméras réelles, l'image de synthèse permet au responsable de supervision de mieux comprendre les phénomènes physiques en cours dans le dispositif et par conséquent de comprendre plus facilement comment celui-ci évolue.

### COMBINAISON DE L'IMAGE ACQUISE ET DE L'IMAGE CALCULEE

Dans l'image de supervision, l'image acquise et l'image de synthèse peuvent être combinées de différentes manières.

Ces deux images peuvent être superposées en utilisant des calques partiellement transparents. Il est également possible que l'image de synthèse et l'image acquise soient complémentaires ; par exemple dans l'image de supervision, tous les pixels relatifs à une pièce spécifique du dispositif peuvent provenir de l'image de synthèse, les autres pixels provenant de l'image acquise.

L'image de supervision peut combiner différents calques correspondant respectivement à l'image acquise et l'image de synthèse, en utilisant la transparence.

Naturellement, le procédé d'affichage est d'autant plus performant que dans l'image de supervision, l'image acquise et l'image de synthèse se combinent de manière réaliste.

Le fait que ces deux images se combinent de manière réaliste signifie que lorsque ces deux images sont combinées, elles forment ensemble une image dans laquelle la partie du dispositif représentée par l'image de synthèse apparaît dans une position relative normale, ou du moins qui apparaît comme normale, par rapport à la partie du dispositif (ou au reste du dispositif) représenté(e) par l'image acquise par la caméra.

Il peut arriver que lors de la mise en œuvre du procédé, l'image initialement calculée à l'étape c) ne puisse pas être combinée de manière réaliste avec l'image acquise par la caméra.

Pour remédier à ce problème, dans un mode de mise en œuvre du procédé selon l'invention, au cours de l'étape d) l'image de synthèse est modifiée et/ou recalculée de telle sorte que l'image acquise et l'image de synthèse se combinent de manière réaliste pour former l'image de supervision.

Tout d'abord il faut noter qu'il n'est pas indispensable que l'image acquise et l'image de synthèse se correspondent parfaitement. Avantageusement l'image de supervision conserve son intérêt même s'il existe certaines différences entre l'image acquise et l'image de synthèse.

Ces différences peuvent tout d'abord, si elles sont peu importantes, être surmontées en effectuant un redimensionnement de l'image de synthèse, c'est-à-dire en lui appliquant une dilatation ou contraction suivant ses deux directions, et éventuellement une rotation.

Si les différences entre l'image acquise et l'image de synthèse sont importantes, cela peut provenir d'erreurs quant aux paramètres effectifs d'acquisition d'image par la caméra active.

En pratique, les paramètres d'image des caméras sont connus aux erreurs de mesure de ces paramètres près. Il peut donc exister un écart entre les paramètres d'image théoriques et les paramètres d'image effectifs pour l'image acquise.

Dans ce cas, à l'étape d) il est nécessaire d'identifier à partir de l'image acquise, les paramètres d'image réels de ceux-ci ; de mettre à jour à partir des paramètres effectifs de l'image acquise, les paramètres d'image de synthèse ; de recalculer l'image de synthèse en prenant en compte les paramètres d'image de synthèse mis à jour, et enfin de recalculer l'image de supervision.

Dans le procédé d'affichage, un certain nombre de choix sont laissés en général sous le contrôle du responsable de supervision : en particulier, le choix de la caméra active, dont l'image est affichée sur l'afficheur, et les paramètres de celle-ci (position, orientation, paramètres optiques).

Dans certains cas, il peut être décidé d'afficher une image de supervision dans laquelle le dispositif est filmé avec une position ou une orientation de caméra, ou encore des paramètres optiques de caméra, qui ne correspondent pas aux paramètres en cours des différentes caméras.

Dans ce cas, le procédé d'affichage d'image de supervision peut être mis en œuvre de la manière suivante : à l'étape a2) on détermine des paramètres d'image qui ne sont ceux d'aucune des caméras réelles à l'instant considéré ; et avant d'acquérir l'image acquise à l'étape b2), au cours d'une étape b1) on adapte les paramètres de la caméra active de manière à ce qu'ils correspondent sensiblement aux paramètres d'image déterminés à l'étape a2).

Ainsi dans ce mode de mise en œuvre, les paramètres d'image sont imposés à la caméra de manière à prendre les nouvelles valeurs souhaitées. En d'autres termes, on choisit à l'avance le type d'image de supervision souhaité (la position et l'orientation spécifiques de la caméra par rapport au dispositif, son degré de zoom, etc.) ; on choisit alors la caméra active en fonction de ce choix, et on positionne, oriente et règle la caméra active en fonction de ce choix.

Par ailleurs, la manière dont l'image acquise et l'image de synthèse sont combinées est en général spécifiée par le responsable de supervision pendant la mise en œuvre du système de supervision. Celui-ci peut par exemple avoir à sa disposition des fonctions lui permettant d'afficher l'image de synthèse, et dans celle-ci, de rendre transparents (ou invisibles à l'écran) les composants du dispositif qu'il ne veut pas voir, ainsi que des fonctions d'affichage de paramètres spécifiques du dispositif.

D'autre part, en plus de ces possibilités le procédé d'affichage d'image de supervision conformément à l'invention présente la capacité de modifier automatiquement l'affichage dans certaines circonstances.

Dans ce but, le système de supervision est informé de l'évolution du dispositif grâce à l'étape a0 du procédé, durant laquelle on acquiert un ou plusieurs paramètres d'état du dispositif. Le système de supervision peut par exemple recevoir des paramètres d'état du dispositif transmis par un système de suivi du dispositif (appelé système de suivi santé ou 'Health monitoring system'), de préférence périodiquement et en temps réel.

Suite à l'acquisition de ce ou ces paramètres d'état et conformément à l'invention, au moins une des opérations suivantes intervenant dans l'obtention de l'image de supervision est faite en fonction du ou des paramètres d'état du dispositif :
- à l'étape a2), les paramètres d'image sont déterminés, et/ou
- à l'étape c), l'image de synthèse est calculée, et/ou
- à l'étape d), l'image de supervision est formée.

Le ou les paramètres d'état du dispositif sont des paramètres variables en fonction du temps. Ces paramètres peuvent être ou comprendre une information de défaut ou de dysfonctionnement du dispositif. Cette information peut être par exemple un message d'alerte ou d'alarme généré par le système de suivi du dispositif.

Selon l'invention, les paramètres d'image sont ajustés, et l'image de synthèse et l'image de supervision sont recalculées, de préférence en temps réel, après toute variation d'un paramètre d'état du dispositif justifiant un changement d'affichage du système de supervision. Ainsi, le responsable de supervision est informé en temps réel, sur l'afficheur, de toute évolution du dispositif supervisé.

En particulier, à l'étape a2) les paramètres d'image sont modifiés, et à l'étape c) l'image de synthèse est ecalculée, et à l'étape d), l'image de supervision étant formée à nouveau, lorsqu'un paramètre d'état du dispositif acquis à l'étape a0) franchit un seuil prédéterminé.

L'image de supervision est donc elle-même fonction de l'anomalie détectée.

L'invention comprend également un système de supervision pour la supervision d'un dispositif selon la revendication 4.

Les paramètres d'image pour l'image de supervision sont généralement un jeu de paramètres d'image unique, utilisé à la fois pour acquérir des images à l'étape b2), et pour calculer des images de synthèse à l'étape c).

Il peut également s'agir de deux jeux de paramètres d'images distincts, à savoir un jeu de paramètres d'image acquise et un jeu de paramètres d'image de synthèse, utilisés alors respectivement pour l'acquisition d'images à l'étape b2) et pour la formation d'images de synthèse à l'étape c).

On comprend que les moyens de détermination sont aptes dans ce dernier cas à définir des paramètres d'image acquise et d'image de synthèse qui sont compatibles, c'est-à-dire qui permettent qu'à l'étape d), l'image acquise et l'image de synthèse produites sur la base de ces paramètres puissent être combinées de manière réaliste.

De manière équivalente aux points b2), c) et d) ci-dessus, on peut énoncer que l'unité de calcul est configurée pour :
b2) acquérir des images de la caméra active, suivant les paramètres d'image déterminés par les moyens de détermination ;
c) calculer une image de synthèse du dispositif ou d'une partie du dispositif telle que pourrait la fournir une caméra virtuelle en prenant en compte les paramètres d'image déterminés par les moyens de détermination ;
d) former une image dite image de supervision à partir de l'image acquise et de l'image de synthèse de telle sorte que l'image acquise et l'image de synthèse se combinent de manière réaliste pour former l'image de supervision.

Les perfectionnements suivants peuvent également être adoptés, isolément ou en combinaison :
- les moyens d'acquisition peuvent être aptes à ajuster au moins un paramètre d'au moins une caméra réelle de manière à rendre ledit paramètre égal à un paramètre d'image déterminé par l'unité de calcul.
- les moyens de calcul et/ou de formation d'image peuvent être aptes à modifier et/ou recalculer l'image de synthèse en fonction de l'image acquise de telle sorte que l'image acquise et l'image ainsi modifiée et/ou recalculée se combinent de manière réaliste à l'étape d) pour former l'image de supervision.
- dans le système de supervision, les moyens de suivi peuvent être des moyens de détection d'anomalie ;
- les moyens de détermination peuvent être aptes à déterminer les paramètres d'image (à l'étape a2) en fonction d'une anomalie détectée sur le dispositif.
- Les moyens de suivi peuvent dans ce cas comporter des moyens de détection d'anomalie comportant un interpréteur d'anomalies, apte à sélectionner une information d'anomalie principale parmi un grand nombre d'informations d'anomalies disponibles, pour calculer l'image modifiée en fonction de cette information d'anomalie principale.
- les moyens de calcul peuvent être aptes à calculer l'image de synthèse à l'étape c) en fonction d'une anomalie détectée sur le dispositif.

Dans le cadre de l'invention, il est proposé également un programme d'ordinateur comportant des instructions pour l'exécution des étapes du procédé d'affichage tel que défini précédemment, lorsque ledit programme est exécuté par un ordinateur relié à au moins une caméra réelle disposée de manière à pouvoir filmer tout ou partie du dispositif.

Dans le cadre de l'invention, il est proposé également un support d'enregistrement lisible par un ordinateur sur lequel est enregistré un programme d'ordinateur comprenant des instructions pour l'exécution des étapes du procédé d'affichage tel que défini précédemment lorsque ledit programme est exécuté par un ordinateur relié à au moins une caméra réelle disposée de manière à pouvoir filmer tout ou partie du dispositif.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'un système de supervision selon l'invention ;
- la figure 2 est un diagramme illustrant les étapes de la méthode selon l'invention, dans un mode de mise en œuvre ;
- la figure 3 est une vue schématique d'une scène virtuelle utilisée pour le calcul d'image, lors de la mise en œuvre de la méthode selon l'invention ; et
- la figure 4 est une vue schématique illustrant la formation de l'image de supervision à partir d'une image acquise et d'une image de synthèse.

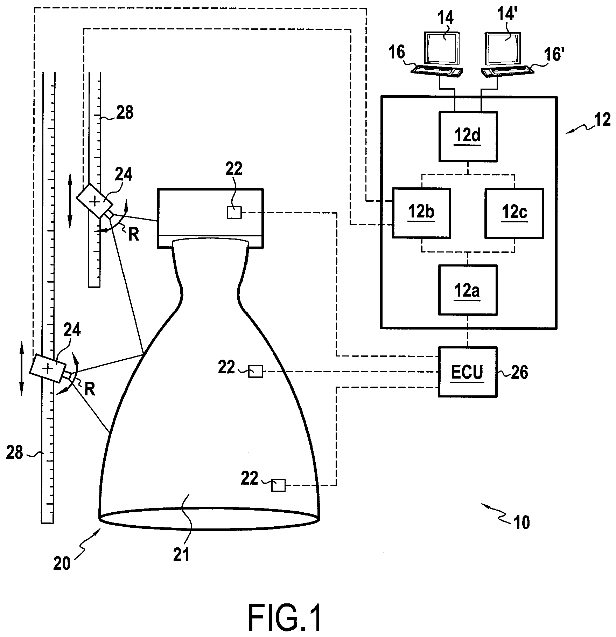

Un système 10 de supervision selon l'invention, pour la supervision d'essais réalisés sur un moteur-fusée 20, est représenté de manière schématique sur la figure 1.

Ce système de supervision 10 permet à un responsable de supervision, en charge des essais, de piloter depuis un poste de contrôle le bon déroulement d'essais prévus pour le moteur 20.

Le moteur 20 est un moteur-fusée d'essai, comportant une tuyère 21, soumis à des essais de fonctionnement de manière classique. Il est placé dans ce but sur un banc d'essais non représenté.

Le moteur 20 est équipé de différents capteurs 22 qui constituent des moyens de suivi du moteur-fusée (ou dispositif) 20. Les capteurs 22 mesurent des paramètres d'état du moteur comme par exemple des températures, des pressions, des accélérations, etc.

Le moteur 20 est de plus placé sous la surveillance de différentes caméras 24.

Les capteurs 22 sont reliés à un calculateur ou unité de commande électronique ('ECU') 26. Celui-ci a pour fonction de suivre en permanence, en temps réel, l'évolution du moteur 20 au cours des essais de fonctionnement. Le calculateur 26 constitue ainsi un « système de suivi santé » du moteur 20. Un tel système est décrit par exemple par le brevet français n°FR2956701.

Le système de supervision 10 comporte une unité de calcul 12, à laquelle sont reliés un écran (ou afficheur) 14 et un clavier 16. Le système de supervision comporte en outre un second écran de contrôle 14' et un second clavier 16'.

L'unité de calcul 12 est conçue pour exécuter un programme informatique d'affichage, permettant l'affichage sur l'écran 14 d'images de supervision du moteur 20. Dans ce but, l'unité de calcul 12 comporte des moyens de détermination 12a, aptes à déterminer la caméra active et les paramètres d'image ; des moyens d'acquisition 12b, pour acquérir les images des caméras, des moyens de calcul 12c pour calculer des images de synthèse du dispositif, et enfin des moyens de formation d'images 12d, pour former les images de supervision à partir des images fournies par les moyens d'acquisition et les moyens de calcul.

Les moyens d'acquisition 12b sont également capables de transmettre aux caméras (et aux moyens de positionnement qui permettent leur mise en position et leur orientation) des paramètres de position et des paramètres optiques souhaités. Ils constituent donc également des moyens d'ajustement de paramètres de caméras.

### INITIALISATION DU PROGRAMME D'AFFICHAGE

### Création de la scène 3D

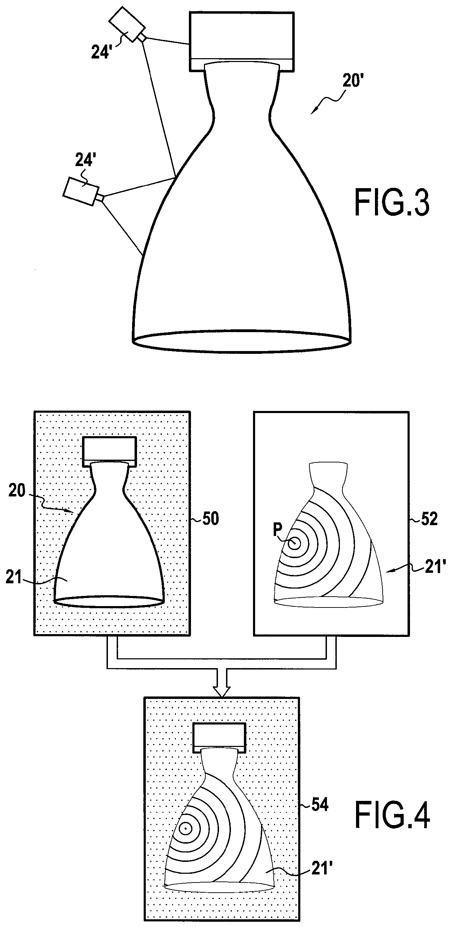

Le programme d'affichage de l'unité de calcul 12 utilise comme données un modèle numérique tridimensionnel 20' du moteur 20. Lors de l'initialisation du programme, une scène virtuelle est définie dans laquelle est disposé le modèle numérique 20' du moteur 20. Des caméras virtuelles 24', ayant des caractéristiques optiques (virtuelles) identiques à celles des caméras réelles 24, sont positionnées dans la scène virtuelle. La scène virtuelle ainsi obtenue est illustrée par la figure 4.

### Paramétrage du programme

En outre, un ensemble de comportements prédéfinis sont programmés.

Chaque comportement prédéfini comprend :
- une condition ou un critère, qui est fonction de paramètres d'état mesurés par les capteurs 22 (et éventuellement d'autres grandeurs comme le temps, etc.), et
- les valeurs de paramètres d'image à utiliser au cas la condition ou le critère ainsi défini est satisfait.

Ainsi, lorsque le système est exploité, dès que la condition ou le critère prédéfini est satisfait(e), l'afficheur et éventuellement la caméra active adoptent immédiatement les paramètres d'image prédéfinis pour ces conditions. Cela permet ainsi que l'affichage le plus adapté aux circonstances soit immédiatement affiché à l'attention du responsable de supervision.

Le système de supervision 10 peut par exemple être programmé pour avoir, en cas de détection d'accroissement du niveau vibratoire d'un palier de moteur, le comportement prédéfini suivant :
- les paramètres d'image sont ajustés de telle sorte que la caméra active s'oriente vers l'emplacement du palier et acquière une image avec le facteur de grossissement (zoom) maximal ;
- la caméra la plus proche du palier est choisie comme caméra active, rapprochée du palier, orientée vers celui-ci ; son facteur de grossissement est rendu maximal ;
- une image est alors acquise par cette caméra ;
- les moyens de calcul 12c calculent une image de synthèse du palier, dans laquelle le palier est représenté avec une couleur spécifique ;
- les moyens de formation d'image 12d combinent cette image de synthèse du palier avec l'image acquise représentant le reste du moteur, de telle sorte que l'image de supervision obtenue fasse apparaître l'image de synthèse du palier au sein de l'image d'ensemble du moteur. Lors de la formation de l'image de supervision, l'image de synthèse est placée sur un calque placé devant le calque contenant l'image acquise par la caméra, de telle sorte que dans l'image de supervision, l'image de synthèse reste entièrement visible.

Le système de supervision 10 peut par exemple être également programmé pour avoir le comportement prédéfini suivant.

Les moyens de calcul peuvent, à l'aide de modèles numériques théoriques, calculer sensiblement en temps réel les variations de certains paramètres dans le moteur, en fonction des mesures disponibles, par exemple :
- Les dissipations énergétiques ;
- les transferts de chaleur.

Par suite, les moyens de calcul intègrent à l'image de synthèse une représentation colorisée du champ de variations du paramètre ainsi calculé. Cette représentation colorisée peut être sous la forme d'un gradient de couleur bien qu'il n'y ait une instrumentation ponctuelle et en nombre limité.

### EXECUTION DU PROGRAMME D'AFFICHAGE

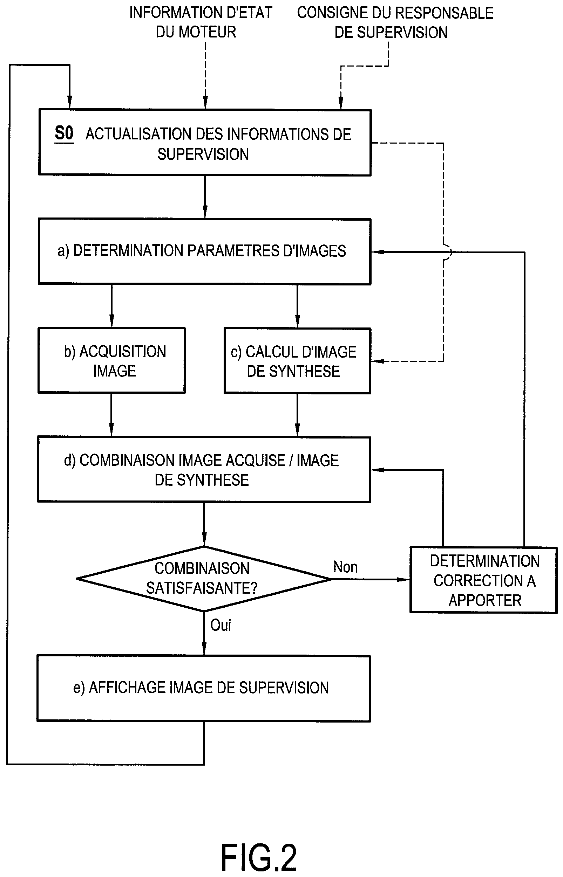

Les étapes principales du programme d'affichage sont illustrées par la figure 2.

Le programme d'affichage est un programme itératif, qui exécute en boucle en permanence les étapes S0) à e) décrites ci-dessous, permettant ainsi d'actualiser l'image de supervision à chaque réalisation de l'étape e).

### Etape a0 Actualisation des informations de supervision

L'étape initiale a0 de ce programme consiste tout d'abord à acquérir des valeurs actualisées des paramètres d'état du moteur 20. Ces informations sont transmises à l'unité de calcul 12 en temps réel par le calculateur 26. Ces informations sont acquises par des moyens 12a de détermination de paramètres d'image de l'unité de calcul 12.

Ces informations comportent des valeurs de paramètres du moteur, et/ou des messages d'alerte issus du calculateur 26 lorsque des valeurs anormales sont relevées pour certains paramètres.

L'étape a0 du programme consiste également à acquérir des valeurs ou consignes spécifiées par le responsable de supervision, par exemple le choix de la caméra active, ou de certains paramètres d'image pour l'image affichée. Les paramètres spécifiés peuvent notamment être des paramètres d'image acquise influant sur la caméra active, et/ou des paramètres d'image de synthèse influant sur l'image de synthèse à intégrer à l'image affichée.

### Etapes a1) et a2) Détermination de la caméra active et des paramètres d'image

Les premières étapes a1) et a2) de traitement sont réalisées par les moyens de détermination 12a de l'unité de calcul 12. Ces moyens de détermination déterminent la caméra active et déterminent les paramètres d'image acquise et d'image de synthèse. Cette étape consiste donc, en vue de la formation d'une image de supervision qui sera ensuite affichée sur l'écran 14, à déterminer :
- parmi les différentes caméras 24, la caméra active, qui fournira une photo du dispositif ou d'une partie de celui-ci ;
- les paramètres d'image acquise que devra avoir l'image acquise par la caméra active, à savoir la position et l'orientation de prise de vue de celle-ci par rapport au moteur 20, et les paramètres optiques que doit prendre la caméra, par exemple le facteur de zoom ; et
- les paramètres d'image de synthèse que devra avoir l'image de synthèse, à savoir la position et l'orientation de prise de vue de celle-ci par rapport au modèle numérique du moteur 20, la ou les positions spécifiques de celui-ci dans l'espace (qui peuvent différer de la position des pièces réelles correspondantes), et les paramètres optiques que doit prendre la caméra virtuelle pour produire une image de la scène virtuelle, comme par exemple le facteur de zoom.

Le plus souvent, les paramètres d'image acquise sont identiques aux paramètres d'image de synthèse. Cependant, le programme exécuté par le système 10 peut être prévu pour que les paramètres d'image soient différents pour l'image acquise et pour l'image de synthèse. Cette situation peut survenir par exemple au cas où l'image de supervision voulue est une image d'ensemble du moteur 20, mais que l'on souhaite insérer dans cette image d'ensemble une image de synthèse représentant seulement un composant du moteur, par exemple de petite taille. Les paramètres d'image de l'image de synthèse sont alors spécifiés de telle sorte que l'image de synthèse ne représente que le composant en question.

D'autre part, le plus souvent, les moyens de détermination utilisent comme paramètres d'image (acquise et de synthèse) les paramètres d'image de la caméra active 24 utilisée précédemment. Le responsable de supervision qui opère le système de supervision 10 spécifie la caméra active par défaut (utilisée lors du démarrage du système) ; de plus, comme indiqué précédemment il peut à l'étape S0 avoir spécifié une nouvelle caméra comme caméra active, ou avoir modifié les paramètres d'image.

Ainsi, en prenant en compte les consignes du responsable de supervision, les moyens de détermination définissent les paramètres pour les images acquise et de synthèse.

Une propriété particulièrement intéressante du système de supervision 10 est son comportement en cas de dysfonctionnement du moteur 20 en cours d'essai.

Si un message de dysfonctionnement spécifique (faisant partie d'une liste prédéterminée) est transmis à l'unité 12 par le calculateur 26, ou si certains paramètres du moteur 20 dépassent certaines valeurs prédéterminées, à l'étape a2) le programme exécuté par l'unité de calcul 12 définit lui-même, automatiquement, de nouveaux paramètres d'image.

Par exemple, si certains messages de dysfonctionnement spécifiques concernant un composant critique du moteur 20 sont reçus, les moyens de détermination prennent en compte automatiquement (sans intervention du responsable de supervision) des paramètres d'image qui permettent d'afficher spécifiquement à l'écran le composant qui connaît le dysfonctionnement.

Les paramètres d'image acquise sont ainsi ajustés par exemple pour que la caméra active soit la plus proche du composant défaillant qui connaît le dysfonctionnement ; la caméra est alors positionnée au plus près de ce composant et orientée vers celui-ci. Le facteur de zoom (seul paramètre optique ajustable sur les caméras 24) est ajusté pour que le composant défaillant soit visible dans les meilleures conditions sur l'image de la caméra active.

### Etape b) Acquisition de l'image

Cette étape comporte deux sous-étapes.

### b1) Ajustement de la caméra active

Après que les paramètres d'image ont été déterminés (étape a2), au cas où les paramètres de la caméra active ne correspondent pas aux paramètres d'image acquise, la caméra active est ajustée pour que ses paramètres correspondent aux paramètres d'image acquise souhaités déterminés par les moyens de détermination 12a.

Dans l'exemple présenté, les caméras 24 sont mobiles en translation suivant l'axe vertical sur des crémaillères 28. Elles sont également orientables par une rotation autour d'un axe horizontal (flèches R).

Aussi, pour ajuster les paramètres de la caméra active 24, les moyens d'acquisition 12b (fonctionnant comme moyens d'adaptation de paramètres de caméra) transmettent à la caméra active 24 et aux moyens de positionnement de celle-ci les paramètres d'image acquise souhaités. Les moyens de positionnement positionnent et orientent alors cette caméra, et celle-ci ajuste ses paramètres internes (notamment le facteur de zoom), conformément aux paramètres transmis.

### Etape b2) Acquisition de l'image acquise

Une fois la caméra positionnée et ajustée aux paramètres d'image acquise (le cas échéant), les moyens d'acquisition 12b procèdent à l'acquisition d'une image de la caméra active 24.

### Etape c) Calcul de l'image de synthèse

D'autre part, le système 10 calcule l'image de synthèse en suivant les paramètres d'image de synthèse. Cette image représente une partie du moteur 20 - ou éventuellement le moteur 20 en entier -.

Les caractéristiques de l'image de synthèse sont en général prédéterminées, ou spécifiées par le responsable de supervision en fonction des paramètres qu'il souhaite suivre.

Ainsi, un affichage par défaut est défini pour chacun des composants du moteur. Cet affichage par défaut peut inclure la représentation de certains paramètres ; par exemple pour la tuyère du moteur, le taux de vibrations est affiché par défaut.

Le responsable de supervision peut en outre demander l'affichage de paramètres spécifiques.

Cependant, les caractéristiques de l'image de synthèse peuvent également, dans certaines circonstances, être définies en fonction des informations d'état du moteur 20.

Ainsi, au cas où certains messages de dysfonctionnement prédéterminés sont émis, ou si certains paramètres dépassent certaines valeurs prédéterminées, les moyens de calcul 12c prennent en compte des caractéristiques spécifiques prédéterminées pour l'image de synthèse. Ces caractéristiques spécifiques sont de différentes natures ; il peut s'agir :
- De mettre en transparence certains composants à travers lesquels l'on souhaite pouvoir voir (composant visible/non visible) ;
- De positionner dans des positions spécifiques certains composants, pour que la vue obtenue soit plus significative (par exemple, on peut spécifier que les composants du moteur soient positionnés en 'éclaté' pour que les parties internes du moteur soient visibles ;
- D'afficher des valeurs des paramètres que l'on considère comme les plus importants pour le responsable de supervision, si il reçoit le message de dysfonctionnement considéré. Les valeurs de paramètres peuvent être affichées sous forme numérique, ou plus avantageusement avec de fausses couleurs conventionnelles, sur le moteur lui-même (ou seulement sur certains de ses composants) ;
- De représenter le(s) composant(s) en défaut suivant certaines couleurs ayant une signification conventionnelle prédéterminée, éventuellement clignotantes.

Par exemple, si la température en un point de la tuyère dépasse une valeur prédéterminée, les moyens de calcul modifient les caractéristiques de l'image de synthèse afin que l'information de température sur la tuyère soit affichée, c'est-à-dire que l'image de synthèse soit calculée de manière à représenter les variations du champ de température sur la tuyère, comme le montre la figure 4 (Cette figure montre des courbes isothermes entourant un point chaud P de la tuyère).

### Etape d) Formation de l'image de supervision

Une fois que l'image acquise et l'image de synthèse ont été obtenues, les moyens de formation d'image 12d de l'unité 12 forment l'image de supervision.

Le plus souvent, les paramètres d'image acquise et d'image de synthèse se correspondent ce qui fait que l'image de synthèse peut être combinée facilement à l'image acquise ; par exemple, parce que les paramètres d'image sont exactement les mêmes.

Cependant, il peut arriver que la combinaison de l'image acquise et de l'image de synthèse ne produise pas une image réaliste.

Après avoir combiné les deux images, le programme d'affichage évalue si la combinaison est satisfaisante. Cette évaluation peut se faire par une extraction d'arêtes dans les deux images, et une évaluation de la correspondance des arêtes entre les deux images.

Si la combinaison de l'image acquise et de l'image de synthèse est satisfaisante, l'image de supervision obtenue est envoyée à l'écran 14.

Dans le cas contraire, l'image de supervision est recalculée. Ce recalcul peut se faire de différentes manières.

Si les différences sont minimes, des traitements d'image basiques tels que l'application de facteurs d'échelle (fonctions 'Scale') dans les deux directions, sont appliquées à l'image de synthèse, de manière à mieux faire correspondre celle-ci à l'image acquise. Seule l'étape d) de détermination de l'image de supervision par combinaison des images acquise et de synthèse est faite à nouveau.

Si les différences sont plus importantes, l'image de synthèse est recalculée. L'unité de calcul détermine alors de nouveaux paramètres d'image de synthèse, plus proche des paramètres d'image effectifs de l'image acquise (étape a2).

Ces nouveaux paramètres d'image de synthèse peuvent être calculés de différentes manières.

Ils peuvent tout d'abord être calculés à partir de l'image acquise elle-même. Dans ce but, des cibles (par exemple des pastilles circulaires en matériau rétroréfléchissant) peuvent être placées sur le moteur 20, et l'unité de calcul comporte des moyens pour déterminer les caractéristiques d'image d'une image simplement à partir des positions des cibles apparaissant dans l'image.

De manière alternative, les paramètres d'image de synthèse peuvent être recalculés à partir de l'image acquise, sans qu'il soit nécessaire d'intégrer des cibles dans la scène. Dans ce but, l'unité de calcul peut comporter des moyens pour déterminer les caractéristiques d'image d'une image en effectuant une extraction de contours dans l'image acquise, et en appliquant un algorithme de reconnaissance de forme aux contours ainsi extraits.

Lorsque les nouveaux paramètres d'image de synthèse ont été fixés, les moyens de calcul 12c calculent à nouveau une image de synthèse sur la base de ces nouveaux paramètres (étape c). L'image de supervision est alors formée en combinant l'image acquise et la nouvelle image de synthèse (étape d).

Si la combinaison de l'image acquise avec la nouvelle image de synthèse est satisfaisante, la nouvelle image de supervision est alors transmise à l'écran 14. Dans le cas contraire, l'étape d'amélioration de l'image de synthèse est réalisée à nouveau.

Un exemple de formation d'une image de supervision apparaît sur la figure 4. Celle-ci représente d'une part une image 50 acquise par une caméra 24 ; cette image représente l'ensemble du moteur 20.

La figure 4 présente également une image de synthèse 52. Sur celle-ci est représentée uniquement la tuyère 21 du moteur. Cette tuyère est représentée au moyen du modèle numérique 21' de la tuyère. Sur le modèle numérique 21' sont représentées les variations de température à la surface de la tuyère, sous forme de courbes isothermes.

La figure 4 montre enfin l'image de supervision 54 formée par combinaison de l'image acquise 50 et de l'image de synthèse 52. Dans l'image 54, la représentation de la tuyère provient de l'image de synthèse 52 (et donc du modèle numérique 21', sur lequel sont représentées les courbes isothermes) ; tout le reste de l'image provient de l'image 50 acquise par la caméra.

Dans une variante du programme d'affichage, les moyens de détermination déterminent systématiquement les paramètres d'image de synthèse à partir de l'image acquise, par exemple en utilisant des cibles comme indiqué précédemment.

L'unité de calcul 12 fonctionne en temps réel, c'est-à-dire que l'ensemble des étapes a1) à e) sont effectuées en temps réel.

## Revendications

1. Procédé d'affichage d'image de supervision pour la supervision d'un dispositif (20) au moyen d'un système de supervision (10), le système de supervision comprenant un afficheur (14) et au moins une caméra réelle (24) disposée de manière à pouvoir filmer tout ou partie du dispositif ;
le procédé comprenant les étapes suivantes :
a1) on choisit une caméra dite caméra active parmi plusieurs caméras, si le système comporte plusieurs caméras ;
a2) on détermine deux jeux de paramètres d'image, à savoir un jeu de paramètres d'image acquise et un jeu de paramètres d'image de synthèse, chaque jeu de paramètres d'image comprenant une position et une orientation relatives de caméra par rapport au dispositif, et un ou des paramètres optiques de caméra ;
b2) à l'aide de la caméra active, on acquiert suivant les paramètres d'image acquise une image acquise (50) représentant tout ou partie du dispositif ;
c) on calcule une image de synthèse (52) du dispositif ou d'une partie du dispositif telle que pourrait la fournir une caméra virtuelle en prenant en compte les paramètres d'image de synthèse ;
d) on forme une image dite image de supervision (54) à partir de l'image acquise et de l'image de synthèse de telle sorte que l'image acquise et l'image de synthèse se combinent de manière réaliste pour former l'image de supervision ; et
e) on affiche l'image de supervision sur l'afficheur ;
le procédé **se caractérisant en ce que** :
il comporte en outre une étape a0) durant laquelle on acquiert au moins un paramètre d'état du dispositif ; et **en ce que**
- à l'étape a2), les paramètres d'image sont déterminés en fonction dudit au moins un paramètre d'état du dispositif, et sont modifiés lorsque ledit au moins un paramètre d'état du dispositif acquis à l'étape a0) franchit un seuil prédéterminé, l'image de supervision étant formée à nouveau.

2. Procédé d'affichage selon la revendication 1, dans lequel à l'étape a2), on détermine des paramètres d'image qui ne sont ceux d'aucune des caméras réelles à l'instant considéré ; et avant d'acquérir l'image acquise à l'étape b2), au cours d'une étape b1) on adapte les paramètres de la caméra active de manière à ce qu'ils correspondent sensiblement aux paramètres d'image déterminés à l'étape a2).

3. Procédé d'affichage selon la revendication 1 ou 2, dans lequel l'image de synthèse est modifiée et/ou recalculée en fonction de l'image acquise de telle sorte qu'à l'étape d) l'image acquise et l'image de synthèse se combinent de manière réaliste pour former l'image de supervision.

4. Système de supervision (10) pour la supervision d'un dispositif, comprenant une unité de calcul (12), un afficheur (14), et au moins une caméra (24) ;
système de supervision dans lequel l'unité de calcul comporte :
a) des moyens de détermination (12a), aptes à déterminer des paramètres d'image pour une image (54) dite image de supervision, lesdits paramètres d'image comprenant une position et une orientation relatives de caméra par rapport à un dispositif filmé par ladite au moins une caméra, et un ou des paramètres optiques de caméra ; et à faire le choix d'une caméra dite caméra active parmi plusieurs caméras, lorsque le système comporte une pluralité de caméras ;
b2) des moyens d'acquisition (12b), aptes à acquérir des images de la caméra active, suivant les paramètres d'image déterminés par les moyens de détermination ;
c) des moyens de calcul (12c), aptes à calculer une image de synthèse du dispositif ou d'une partie du dispositif telle que pourrait la fournir une caméra virtuelle en prenant en compte les paramètres d'image déterminés par les moyens de détermination ;
d) des moyens de formation d'images (12d), aptes à former ladite image de supervision à partir d'une image acquise (50) et d'une image de synthèse (52) de telle sorte que l'image acquise et l'image de synthèse se combinent de manière réaliste pour former l'image de supervision (54) ;
et dans lequel l'afficheur est apte à (e) afficher l'image de supervision ;
le système **se caractérisant en ce qu'**il comprend en outre des moyens (22) de suivi du dispositif, aptes à acquérir au moins un paramètre d'état du dispositif ; et **en ce que** les moyens de détermination sont aptes à déterminer les paramètres d'image en fonction dudit au moins un paramètre d'état du dispositif, et sont aptes à les modifier lorsque ledit au moins un paramètre d'état du dispositif acquis à l'étape a0) franchit un seuil prédéterminé, les moyens de formation d'images (12d) étant aptes à former l'image de supervision de nouveau.

5. Système de supervision selon la revendication 4, dans lequel les moyens d'acquisition (12b) sont aptes à ajuster au moins un paramètre d'au moins une caméra réelle (24) de manière à rendre ledit paramètre égal à un paramètre d'image déterminé par l'unité de calcul.

6. Système de supervision selon la revendication 4 ou 5, dans lequel les moyens de calcul et/ou de formation d'image sont aptes à modifier et/ou recalculer l'image de synthèse en fonction de l'image acquise de telle sorte que l'image acquise et l'image ainsi modifiée et/ou recalculée se combinent de manière réaliste à l'étape d) pour former l'image de supervision.

7. Programme d'ordinateur comportant des instructions pour l'exécution des étapes du procédé d'affichage selon l'une quelconque des revendications 1 à 3 lorsque ledit programme est exécuté par un ordinateur relié à au moins une caméra réelle (24) disposée de manière à pouvoir filmer tout ou partie du dispositif (20).

8. Support d'enregistrement lisible par un ordinateur sur lequel est enregistré un programme d'ordinateur comprenant des instructions pour l'exécution des étapes du procédé d'affichage selon l'une quelconque des revendications 1 à 3 lorsque ledit programme est exécuté par un ordinateur relié à au moins une caméra réelle (24) disposée de manière à pouvoir filmer tout ou partie du dispositif (20).

## Patentansprüche

1. Überwachungsbild-Anzeigeverfahren zur Überwachung einer Vorrichtung (20) mittels eines Überwachungssystems (10), das Überwachungssystem umfassend eine Anzeige (14) und mindestens eine reale Kamera (24), die angeordnet ist, um die gesamte Vorrichtung oder einen Teil davon filmen zu können;
das Verfahren umfassend die folgenden Schritte:
a1) Auswählen einer Kamera, die sogenannte aktive Kamera, aus mehreren Kameras, wenn das System mehrere Kameras umfasst;
a2) Bestimmen von zwei Bildparametersätzen, nämlich einen Bildparametersatz für das erfasste Bild und einen Synthese-Bildparametersatz, jeder Bildparametersatz umfassend eine relative Kameraposition und - ausrichtung in Bezug auf die Vorrichtung und einen oder mehrere optische Kameraparameter;
b2) mittels der aktiven Kamera Erfassen gemäß den erfassten Bildparametern eines erfassten Bilds (50), das die gesamte Vorrichtung oder einen Teil davon darstellt;
c) Berechnen eines Synthese-Bilds (52) der Vorrichtung oder eines Teils der Vorrichtung, wie es eine virtuelle Kamera bereitstellen könnte, unter Berücksichtigung der Synthese-Bildparameter;
d) Bilden eines Bilds, das sogenannte Überwachungsbild (54), anhand des erfassten Bilds und des Synthese-Bilds, sodass das erfasste Bild und das Synthese-Bild realistisch kombiniert werden, um das Überwachungsbild zu bilden; und
e) Anzeigen des Überwachungsbilds auf der Anzeige; wobei das Verfahren **dadurch gekennzeichnet ist, dass**:
es ferner einen Schritt a0) umfasst, bei dem mindestens ein Zustandsparameter der Vorrichtung erfasst wird; und dadurch, dass
- in Schritt a2) die Bildparameter abhängig von dem mindestens einen Vorrichtungszustandsparameter bestimmt werden, und geändert werden, wenn der mindestens eine in Schritt a0) erfasste Vorrichtungszustandsparameter einen vorbestimmten Schwellenwert überschreitet, wobei das Überwachungsbild erneut gebildet wird.

2. Anzeigeverfahren nach Anspruch 1, wobei in Schritt a2) Bildparameter bestimmt werden, die zu dem betreffenden Zeitpunkt nicht die von einer der realen Kameras sind; und vor Erfassen des in Schritt b2) erfassten Bilds in einem Schritt b1) die Parameter der aktiven Kamera angepasst werden, sodass sie im Wesentlichen den in Schritt a2) bestimmten Bildparametern entsprechen.

3. Anzeigeverfahren nach Anspruch 1 oder 2, wobei das Synthese-Bild abhängig von dem erfassten Bild geändert und/oder neu berechnet wird, sodass in Schritt d) das erfasste Bild und das Synthese-Bild realistisch kombiniert werden, um das Überwachungsbild zu bilden.

4. Überwachungssystem (10) zur Überwachung einer Vorrichtung, umfassend eine Recheneinheit (12), eine Anzeige (14) und mindestens eine Kamera (24);
ein Überwachungssystem, bei dem die Recheneinheit Folgendes umfasst:
a) Bestimmungseinrichtungen (12a), die geeignet sind, um Bildparameter für ein Bild (54), das sogenannte Überwachungsbild, zu bestimmen, die Bildparameter umfassend eine relative Kameraposition und -ausrichtung in Bezug auf eine Vorrichtung, die von der mindestens einen Kamera aufgenommen wird, und einen oder mehrere optische Kameraparameter; und Auswählen einer Kamera, die sogenannte aktive Kamera, aus mehreren Kameras, wenn das System eine Vielzahl von Kameras umfasst;
b2) Erfassungseinrichtungen (12b), die geeignet sind, um Bilder der aktiven Kamera gemäß den von den Bestimmungseinrichtungen bestimmten Bildparametern zu erfassen;
c) Berechnungseinrichtungen (12c), die geeignet sind, um ein Synthese-Bild der Vorrichtung oder eines Teils der Vorrichtung zu berechnen, wie es eine virtuelle Kamera bereitstellen könnte, unter Berücksichtigung der Bildparameter, die von den Bestimmungseinrichtungen bestimmt werden;
d) Bilderzeugungseinrichtungen (12d), die geeignet sind, um das Überwachungsbild anhand eines erfassten Bilds (50) und eines Synthese-Bilds (52) zu bilden, sodass das erfasste Bild und das Synthese-Bild realistisch kombiniert werden, um das Überwachungsbild (54) zu bilden;
und wobei die Anzeige geeignet ist, um (e) das Überwachungsbild anzuzeigen;
das System **dadurch gekennzeichnet ist, dass** es ferner Einrichtungen (22) zur Verfolgung der Vorrichtung umfasst, die geeignet sind, um mindestens einen Zustandsparameter der Vorrichtung zu erfassen; und dass die Bestimmungseinrichtungen geeignet sind, um die Bildparameter abhängig von dem mindestens einen Zustandsparameter der Vorrichtung zu bestimmen, und geeignet sind, um sie zu ändern, wenn der mindestens eine Zustandsparameter der Vorrichtung, der in Schritt a0) erfasst wird, einen vorbestimmten Schwellenwert überschreitet, wobei die Bilderzeugungseinrichtungen (12d) geeignet sind, um das Überwachungsbild erneut zu bilden.

5. Überwachungssystem nach Anspruch 4, wobei die Erfassungseinrichtungen (12b) geeignet sind, um mindestens einen Parameter mindestens einer realen Kamera (24) anzupassen, um den Parameter gleich einen von der Recheneinheit bestimmten Bildparameter zu machen.

6. Überwachungssystem nach Anspruch 4 oder 5, wobei die Berechnungs- und/oder Bilderzeugungseinrichtungen geeignet sind, um das Synthese-Bild abhängig von dem erfassten Bild zu ändern und/oder neu zu berechnen, sodass das erfasste Bild und das geänderte und/oder neu berechnete Bild in Schritt d) realistisch kombiniert werden, um das Überwachungsbild zu bilden.

7. Rechnerprogramm, umfassend Anweisungen zur Ausführung der Schritte des Anzeigeverfahrens nach einem der Ansprüche 1 bis 3, wenn das Programm von einem Rechner ausgeführt wird, der mit mindestens einer realen Kamera (24) verbunden ist, die angeordnet ist, um die gesamte Vorrichtung (20) oder einen Teil davon filmen zu können.

8. Rechnerlesbares Aufzeichnungsmedium, auf dem ein Rechnerprogramm aufgezeichnet ist, umfassend Anweisungen zur Ausführung der Schritte des Anzeigeverfahrens nach einem der Ansprüche 1 bis 3, wenn das Programm von einem Rechner ausgeführt wird, der mit mindestens einer realen Kamera (24) verbunden ist, die angeordnet ist, um die gesamte Vorrichtung (20) oder einen Teil davon filmen zu können.

## Claims

1. A method for displaying a supervision image for the supervision of a device (20) by means of a supervision system (10), the supervision system comprising a display (14) and at least one real camera (24) arranged so as to be able to film all or part of the device;
the method comprising the following steps:
a1) a camera called an active camera is selected from several cameras, if the system comprises several cameras;
a2) two sets of image parameters are determined, specifically a set of acquired image parameters and a set of synthesis image parameters, each set of image parameters comprising a relative camera position and orientation relative to the device, and one or more optical parameter(s) of camera;
b2) an acquired image (50) is acquired showing all or part of the device by means of the active camera, according to the acquired image parameters;
c) a synthesis image (52) of the device or part of the device is calculated such as a virtual camera could provide taking into account the synthesis image parameters;
d) an image called supervision image (54) is formed from the acquired image and the synthesis image such that the acquired image and the synthesis image are combined realistically to form the supervision image; and
e) the supervision image is displayed on the display;
the method being **characterized in that**:
it further comprises a step a0) during which at least one state parameter of the device is acquired; and **in that** at step a2) the image parameters are determined as a function of said at least one state parameter of the device, and are modified when said at least one state parameter of the device acquired at step a0) exceeds a predetermined threshold, the supervision image being formed again.

2. The display method according to claim 1, wherein at step a2) image parameters which are not those of any one of the real cameras are determined at the relevant instant; and prior to acquiring the acquired image at step b2), during a step b1) the parameters of the active camera are adapted such that they correspond substantially to the image parameters determined at step a2).

3. The display method according to claim 1 or 2, wherein the synthesis image is modified and/or recalculated as a function of the acquired image such that at step d) the acquired image and the synthesis image are combined realistically to form the supervision image.

4. A supervision system (10) for the supervision of a device, comprising a computing unit (12), a display (14), and at least one camera (24);
supervision system in which the computing unit comprises:
a) determination means (12a), capable of determining image parameters for an image (54) called supervision image, said image parameters comprising a relative camera position and orientation relative to a device filmed by said at least one camera, and one or more optical parameter(s) of camera; and making the choice of a camera called an active camera from several cameras, when the system comprises a plurality of cameras;
b2) acquisition means (12b) capable of acquiring images of the active camera according to the image parameters determined by the determination means;
c) calculation means (12c) capable of calculating a synthesis image of the device or part of the device such that a virtual camera could provide taking into account the image parameters determined by the determination means;
d) image formation means (12d) capable of forming said supervision image from an acquired image (50) and a synthesis image (52) such that the acquired image and the synthesis image are combined realistically to form the supervision image (54);
and wherein the display is capable of (e) displaying the supervision image;
the system being **characterized in that** it further comprises monitoring means (22) of the device, capable of acquiring at least one state parameter of the device; and **in that**
the determination means are capable of determining the image parameters as a function of said at least one state parameter of the device, and are capable of modifying the image parameters when said at least one state parameter of the device acquired exceeds a predetermined threshold, the image formation means being capable of forming the supervision image again.

5. The supervision system according to claim 4, wherein the acquisition means (12b) are capable of adjusting at least one parameter of at least one real camera (24) so as to render said parameter equal to an image parameter determined by the computing unit.

6. The supervision system according to claim 4 or 5, wherein the calculation and/or image formation means are capable of modifying and/or recalculating the synthesis image as a function of the acquired image such that the acquired image and the now modified and/or recalculated image are combined realistically at step d) to form the supervision image.

7. A computer program comprising instructions for execution of the steps of the display method according to any one of claims 1 to 3 when said program is executed by a computer connected to at least one real camera (24) arranged so as to be able to film all or part of the device (20).

8. A recording medium readable by a computer on which is recorded a computer program comprising instructions for execution of the steps of the display method according to any one of claims 1 to 3 when said program is executed by a computer connected to at least one real camera (24) arranged so as to be able to film all or part of the device (20).
